# EUROPÄISCHE PATENTSCHRIFT

(11) **EP 1 923 121 B1**
(45) Veröffentlichungstag und Bekanntmachung des Hinweises auf die Patenterteilung: **05.10.2011**
(21) Anmeldenummer: 07120499.4
(22) Anmeldetag: 12.11.2007
(51) Int. Cl.: B01D 53/04, B01D 53/75, B01D 53/86, H05B 6/60

(54) **Verfahren zur thermo-chromatographischen Erwärmung von Feststoffbetten**
Method for thermo-chromatographic heating of beds containing solids
Procédé destiné au réchauffement thermo-chromatographique de lits contenant des solides

(30) Priorität: 14.11.2006 DE 102006054301; 22.12.2006 DE 102006062651
(43) Veröffentlichungstag der Anmeldung: 21.05.2008
(73) Patentinhaber: Helmholtz-Zentrum für Umweltforschung GmbH - UFZ, 04318 Leipzig (DE)
(72) Erfinder: Roland, Ulf, 04158 Leipzig (DE); Kopinke, Frank-Dieter, 04109 Leipzig (DE); Buchenhorst, Daniel, 04299 Leipzig (DE); Kraus, Markus, 04617 Lödla (DE)
(74) Vertreter: Ziebig, Marlene

(56) Entgegenhaltungen:
- WO-A-79/00251
- WO-A-99/03565
- DE-A1- 19 810 028
- US-B1- 6 358 374

## Beschreibung

Die Erfindung betrifft ein Verfahren zur gezielten und selektiven Erwärmung von Feststoffbetten und zur Initiierung eines gekoppelten Stoff- und Energieflusses mit im Anspruch 1 genannten Merkmalen.

In nahezu allen Bereichen wirtschaftlicher Tätigkeit sind Feststoffe zur Initiierung unterschiedlicher physikalischer, chemischer oder biologischer Prozesse zu erwärmen. Während für die Aufheizung fluider Medien eine Vielzahl von effizienten Methoden zur Verfügung steht, wird für die Erwärmung von festen Stoffen nach wie vor ein großer Entwicklungsbedarf gesehen, da Schüttbetten meist eine geringe effektive Wärmeleitfähigkeit besitzen und in der Regel nicht durchmischt werden können. Die meisten in der Technik derzeit eingesetzten Verfahren beruhen auf der indirekten Erwärmung über Wände und Grenzflächen mit Kontakt zum Schüttbett, wobei die Aufheizgeschwindigkeit und die Homogenität auf Grund von Wärmeübergangsprozessen und Wärmetransport im Schüttbett limitiert sind. Eine andere etablierte Möglichkeit besteht darin, Schüttbetten über den Trägergasstrom zu erwärmen. Der Energieeintrag in das Schüttbett ist hier jedoch durch die verhältnismäßig geringe spezifische Wärmekapazität des Gasstromes begrenzt.

Demgegenüber besitzen direkte Heizverfahren wie ohmsche Widerstandsheizung, induktive oder dielektrische Erwärmung einige Vorteile, da der Energieeintrag vom Trägergasstrom bzw. von Wärmetransportprozessen über Oberflächen und Grenzflächen entkoppelt ist und "stoffstromfrei" erfolgt. Unter diesen Optionen besitzt die dielektrische Erwärmung die größte Flexibilität hinsichtlich der erwärmbaren Medien, da sie auch für Stoffe mit sehr geringer ohmscher Leitfähigkeit anwendbar ist. Im Bereich der dielektrischen Erwärmung haben sich besonders die Anwendung von Mikrowellen (MW) mit Frequenzen von meist einigen GHz und von Radiowellen (RW) mit Frequenzen im MHz-Bereich technisch etabliert. Während die MW-Anwendung durch die meist geringen Eindringtiefen der elektromagnetischen Wellen auf die Erwärmung kleiner Volumina beschränkt ist, können mittels RW in der Regel auch Festbetten im Kubikmeter-Maßstab erwärmt werden. Darüber hinaus ist durch die Anwendung eines elektronischen Anpassnetzwerkes in Verbindung mit dem RW-Generator die Optimierung des Energieeintrages für Medien mit unterschiedlichen dielektrischen Eigenschaften möglich. So können mittels RW auch trockene Materialien effizient erwärmt werden, während dies mittels MW in der Regel nicht möglich ist.

Eine Besonderheit dielektrischer Heizverfahren gegenüber konventionellen Verfahren, die auf der Wärmeleitung in das Medium oder innerhalb des Materials beruhen, besteht darin, dass Temperaturunterschiede innerhalb des Schüttbettes etabliert werden können. Dies ist beispielsweise dadurch realisierbar, dass Stoffe mit unterschiedlichen dielektrischen Eigenschaften und damit unterschiedlicher Energieabsorption vorliegen. Der Ausbildung von Temperaturgradienten entgegen wirken Wärmeausgleichsprozesse innerhalb des Festbettes. Durch die unveränderliche Position der einzelnen Materialpartikel in der Schüttung ist auch das durch die dielektrische Erwärmung entstehende Temperaturprofil definiert.

Die technischen Prozesse in Verbindung mit Festbetten sind meist mit Stoffströmen durch das Festbett verbunden, die über den Trägergasstrom realisiert werden. Die Wechselwirkung mit der Schüttung findet über Adsorption und Desorption, chemische Reaktionen, Erwärmung bzw. Abkühlung oder Trennprozesse statt.

Konventioneller Heizverfahren sind beispielsweise aus US 6 358 374 B1, WO 99/03565 A, DE 198 10 028 A1 und WO 79/00251 A bekannt. Bei der Anwendung konventioneller Heizverfahren sind die Temperaturen über längere Zeiträume zeitlich, da die Aufheizraten und der Wärmeabtransport beschränkt sind, und räumlich konstant. Die Temperatur kann folglich nur eingeschränkt als Prozessparameter genutzt werden.

Die Aufgabe der vorliegenden Erfindung besteht somit darin, ein Verfahren zur gezielten Erwärmung von Feststoffbetten anzugeben, mit dem ein Temperaturgradient innerhalb des Feststoffbettes realisiert und gesteuert werden kann. Damit sollen insbesondere die Einschränkungen nach dem Stand der Technik überwunden und ein Heizverfahren etabliert werden, das die dem jeweiligen Prozess angepasste Erwärmung von Festbetten ermöglicht. Damit verbunden soll die Möglichkeit sein, Stoffströme durch das Festbett ebenfalls in vorteilhafter Weise zu beeinflussen.

Diese Aufgabe wird erfindungsgemäß gelöst durch die Merkmale im kennzeichnenden Teil des Anspruchs 1 im Zusammenwirken mit den Merkmalen im Oberbegriff. Zweckmäßige Ausgestaltungen der Erfindung sind in den Unteransprüchen enthalten.

Das erfindungsgemäße Verfahren zur Erwärmung eines Feststoffbettes weist folgende Verfahrensschritte auf: dielektrische Erwärmung des Feststoffbettes durch Einbringen von elektromagnetischer Strahlung in das Feststoffbett, mittels Radiowellen oder Mikrowellen in einem Frequenzbereich zwischen 100 kHz und 50 Ghz, Einbringen eines Übertragungsmediums in den Anstrombereich oder einen anderen Bereich des Feststoffbettes und gleichzeitige Durchströmung des Feststoffbettes mit einem Trägergas, wobei das Trägergas kontinuierlich in das Feststoffbett eingeführt wird und das Übertragungsmedium diskontinuierlich vor oder während der dielektrischen Erwärmung in das Feststoffbett eingebracht wird, das Feststoffbett mindestens eine das Übertragungsmedium adsorbierende Komponente enthält und das Übertragungsmedium zumindest teilweise am Feststoffbett adsorbiert wird, und das Übertragungsmedium zumindest einen Teil der elektromagnetischen Strahlung absorbiert, Verweilen des Übertragungsmediums im Feststoffbett derart, dass das Übertragungsmedium eine erhöhte Energieabsorption des Feststoffbettes im Vergleich zum reinen Feststoffbett initiiert, Erwärmung des Feststoffbettes aufgrund der erhöhten Energieabsorption des Feststoffbettes, Desorption des Übertragungsmediums aufgrund der Erwärmung des Feststoffbettes, und Transport des desorbierten Übertragungsmediumsdurch das Feststoffbett mittels des Trägergasstroms mittels der Wiederholung der Schritte Adsorption, Erwärmung und Desorption, wobei ein sich durch das Feststoffbett bewegender Temperaturpuls erzeugt wird.

Die gekoppelte, pulsförmige Stoff- und Energieausbreitung im Feststoffbett wird als thermochromatographischer Puls (oder auch vereinfachend als Temperaturpuls) bezeichnet.

Das Festbett wird vorzugsweise kontinuierlich vom Trägergas durchströmt, während das Übertragungsmedium vorzugsweise diskontinuierlich in das Feststoffbett eingebracht wird. Vorzugsweise wird das Übertragungsmedium in definierten Intervallen in das Feststoffbett eingebracht, wobei die entsprechenden Zeitspannen prozessabhängig sind und typischerweise im Bereich zwischen einigen Minuten und Stunden liegen. Vorzugsweise wird das Übertragungsmedium periodisch alle 2 bis 60 min eingebracht. Die Zeitspanne für das Einbringen des Übertragungsmediums ist kurz im Vergleich zum Intervall. Vorzugsweise beträgt die Zeit für die Einbringung (Dosierung) des Übertragungsmediums weniger als 60 s, wobei diese Dauer wiederum abhängig vom konkreten technischen Prozess ist.

Vorzugsweise werden Übertragungsmedien eingesetzt, deren dielektrischer Verlustfaktor, d.h. der Imaginärteil der relativen Dielektrizitätskonstante bei der eingesetzten Frequenz, groß gegenüber dem dielektrischen Verlustfaktor des Feststoffbettes ist. Besonders bevorzugt ist der Einsatz von Wasser als Übertragungsmedium. Für besonders bevorzugt einzusetzende Übertragungsmedien beträgt der dielektrische Verlustfaktor mehr als das Dreifache des dielektrischen Verlustfaktors des Festbettmaterials ohne Übertragungsmedium. Vorzugsweise wird das Übertragungsmedium über das einströmende Trägergas oder durch Direktinjektion in das Feststoffbett eingebracht. Die Injektion erfolgt vorzugsweise im Anstrombereich des Feststoffbettes.

Vorzugsweise wird die Menge des einzubringenden Übertragungsmediums derart gewählt, dass eine Wechselwirkung, beispielsweise durch Adsorption, von mindestens 50 % (bevorzugter 80 % und noch bevorzugter mindestens 99 %) des eingebrachten Übertragungsmediums in einem Bereich erfolgt, der weniger als 50 % (bevorzugter 30 % und noch bevorzugter 15 %) der Länge des Feststoffbettes entspricht. Unter Länge des Feststoffbettes wird hier die gedachte gerade Wegstrecke eines repräsentativen Trägergasmoleküls verstanden, die dieses im Mittel von der Anstrom- bis zur Abstromgrenzfläche zurücklegt. In einem geraden Rohrreaktor ist dies die Schüttbettlänge, in einem U-Rohr oder mehrfach gekrümmten Rohr die Länge der Mittelachse.

Die Initiierung eines thermo-chromatographischen Pulses (Temperaturpuls) ist an bestimmte dielektrische und andere physikalische Eigenschaften des Feststoffes gebunden. Vorzugsweise können Zeolithe unterschiedlicher Struktur (Faujasite wie NaY-Zeolith, ZSM-5, A-Zeolith u.a.), γ-Aluminiumoxid, Silikagel und/oder Aktivkohle als Matrices verwendet werden. Die Feststoffmaterialien können auch aus Stoffgemischen oder dotierten Materialien bestehen. In einem bevorzugten Anwendungsfall handelt es sich um geträgerte Edelmetallkatalysatoren.

Vorzugsweise erfolgt die Erwärmung des Feststoffbettes mittels Radiowellen oder Mikrowellen. Da durch die Energieabsorption des Übertragungsmediums die Erwärmung des Feststoffbettes initiiert werden soll, ist die Verwendung poröser Feststoffe mit entsprechend großer Adsorptionskapazität als Festbettmaterial bevorzugt. Vorzugsweise werden poröse Zeolithe, Metalloxide oder Aktivkohlen mit mittleren Porengrößen im Nanometer-Bereich (1 nm bis 1000 nm) eingesetzt.

Um einen thermo-chromatographischen Puls zu initiieren, werden die Menge des einzubringenden Übertragungsmediums und die Intensität der in das Festbett eingekoppelten elektromagnetischen Strahlung vorzugsweise derart gewählt, dass das Feststoffbett in demjenigen Bereich, in dem das Übertragungsmedium adsorbiert wird, auf eine Temperatur erwärmt wird, bei der mindestens 60 % (bevorzugter 80 % und noch bevorzugter über 90 %) des adsorbierten Übertragungsmediums desorbiert werden. Vorzugsweise wird das Feststoffbett vor Einbringen eines Übertragungsmediums derart erwärmt, dass eine Adsorption von mindestens 90 % des eingebrachten Übertragungsmediums in einem Bereich erfolgt, der weniger als 30 % der Länge des Feststoffbettes entspricht.

Vorzugsweise wird eine entsprechend der Prozesseigenschaften anzustrebende Geschwindigkeit des Übertragungsmediums durch das Feststoffbett aufgrund wiederholter Adsorption, Erwärmung, Desorption und Weitertransport mittels Trägergas durch die Wahl des Materials des Feststoffbettes sowie des Übertragungsmediums sowie die Wahl der Parameter Dosiermenge und Dosiergeschwindigkeit des Übertragungsmediums und Intensität der elektromagnetischen Strahlung eingestellt. Diese Geschwindigkeit, die Geschwindigkeit des thermo-chromatographischen Pulses bei seiner Bewegung durch das Festbett, kann in weiten Grenzen variieren. Sie beträgt in bevorzugten Anwendungen im Bereich der Reaktionstechnik beispielsweise zwischen 1 und 100 mm/min.

Im Folgenden soll eine Reihe von Anwendungsmöglichkeiten in Verbindung mit dem thermo-chromatographischen Puls konkretisiert werden. Die als bevorzugt beschriebenen Varianten können jeweils allein oder in Verbindung miteinander realisiert werden.

Durch die Temperaturerhöhung in Verbindung mit dem thermo-chromatographischen Puls wird in einem Bereich des Feststoffbettes vorzugsweise eine chemische Reaktion initiiert. Vorzugsweise ist die chemische Reaktion eine Oxidation. Vorzugsweise ist die chemische Reaktion eine exotherme Reaktion. Vorzugsweise wird nach Initiierung der chemischen Reaktion die Intensität des zur dielektrischen Erwärmung angelegten elektromagnetischen Feldes reduziert. In einer anderen bevorzugten Variante wird durch den thermo-chromatographischen Puls eine endotherme Reaktion initiiert.

Vorzugsweise wird mit dem Temperaturpuls (thermo-chromatographischen Puls) ein Reaktionsprodukt aus dem Feststoffbett ausgeschleust. Vorzugsweise werden dadurch die Gesamtselektivität und/oder der Gesamtumsatz der Reaktion verändert. Vorzugsweise wird die Zersetzung eines thermisch sensiblen Produktes zumindest teilweise verhindert. Vorzugsweise erfolgt mittels des Temperaturpulses eine Stofftrennung im Feststoffbett. Vorzugsweise werden im Feststoffbett hohe lokale Temperaturgradienten (mindestens 10 K/cm) erzeugt. Vorzugsweise werden im Feststoffbett hohe lokale Aufheizraten (von mehr als 5 K/min) erzielt. Vorzugsweise werden im Feststoffbett durch die Desorption des Übertragungsmediums und/oder eines anderen Stoffes hohe Abkühlraten (erzielte Abkühlrate mehr als 5 K/min) erzielt.

Vorzugsweise erfolgt eine Aufkonzentration mindestens eines Stoffes mittels des Temperaturpulses. Vorzugsweise wird die Temperaturerhöhung des Temperaturpulses zur Aktivierung eines Katalysators oder zur Steigerung des Wirkungsgrades eines Katalysators verwendet. Vorzugsweise werden die effektive Lebensdauer des Katalysators durch die Temperaturregelung mittels des Temperaturpulses erhöht wird und/oder eine Deaktivierung des Katalysators zumindest teilweise verhindert. Vorzugsweise werden mittels des Temperaturpulses temporär reaktive Zonen im Feststoffbett erzeugt.

Vorzugsweise wird das Übertragungsmedium im Trägergas und/oder einem Prozessgas eingebracht, akkumuliert sich im Verlauf der Durchströmung des Feststoffbettes und initiiert bei ausreichender Konzentration einen durch das Feststoffbett wandernden Temperaturpuls, der sich aufgrund wiederholter Adsorption, Erwärmung, Desorption und Weitertransport des Übertragungsmediums mittels Trägergas fortbewegt.

Eine zur Durchführung des erfindungsgemäßen Verfahrens geeignete Vorrichtung zur gezielten selektiven Erwärmung eines durchströmbaren Feststoffbettes, das mit einem Mittel zur dielektrischen Erwärmung des Feststoffbettes verbunden ist, weist Mittel zum Einbringen eines Übertragungsmediums, vorzugsweise während der dielektrischen Erwärmung des Feststoffbettes, zum Zwecke der Initiierung eines das Feststoffbett durchlaufenden Wärme- und Stoffstrompulses auf. Der Festbettreaktor verfügt über mindestens eine Anstrom- und mindestens eine Abstromöffnung. Das Feststoffbett weist vorzugsweise mindestens eine adsorbierende Komponente auf.

Vorzugsweise weist die Vorrichtung ein Mittel zum intervallweisen Einbringen des Übertragungsmediums auf. Vorzugsweise weist die Vorrichtung ein Mittel zum periodischen Einbringen des Übertragungsmediums auf.

Bevorzugte Feststoffbett-Materialien sind Zeolithe, γ-Aluminiumoxid, Silikagel und/oder Aktivkohle. Vorzugsweise weist das Mittel zum Einbringen eines Übertragungsmediums eine Dosiervorrichtung (Einspritzvorrichtung) für eine Flüssigkeit auf.

Vorzugsweise ist das Mittel zur Erwärmung des Feststoffbettes durch mindestens zwei zur dielektrischen Erwärmung geeignete Elektroden gekennzeichnet. Vorzugsweise wird mindestens eine Elektrode zur Erzeugung eines elektromagnetischen Feldes im Feststoff mittels eines Hochfrequenzgenerators (HF-Generators) gespeist. Die dielektrische Erwärmung des Feststoffes kann mit unterschiedlichen Elektrodengeometrien oder mit Axialdipolen (Antennen) realisiert werden. Vorzugsweise ist das Feststoffbett zwischen mindestens zwei zur dielektrischen Erwärmung geeigneten Elektroden angeordnet und mindestens eine der zur dielektrischen Erwärmung geeigneten Elektroden ist mit einem Hochfrequenzgenerator verbunden und mindestens eine weitere der zur dielektrischen Erwärmung geeigneten Elektroden ist mit der Erdung verbunden. Vorzugsweise werden parallele, plattenförmige Elektroden paarweise eingesetzt, um eine möglichst homogene Feldverteilung im Feststoffbett zu realisieren. Vorzugsweise sind das Feststoffbett und die mindestens zwei zur dielektrischen Erwärmung geeigneten Elektroden innerhalb eines Abschirmgehäuses angeordnet. Vorzugsweise ist die mindestens eine zur dielektrischen Erwärmung geeignete Elektrode über ein elektronisches Anpassnetzwerk mit dem HF-Generator verbunden.

In einer weiteren bevorzugten Variante der Anordnung ist der Feststoffbett-Reaktor mit einer Einrichtung zur Erzeugung von Mikrowellen in einer solchen Weise verbunden, dass das Feststoffbett mittels Mikrowellen erwärmt werden kann.

Vorzugsweise weist das Mittel zum Einströmen eines Gasgemisches eine Dosiervorrichtung und/oder einen Gasanalysator und/oder einen Gasfeuchtesensor auf. Vorzugsweise weist das Mittel zum Ausströmen des Gasgemisches einen Durchflussmesser und/oder einen Gasanalysator und/oder einen Gasfeuchtesensor auf.

Vorzugsweise weist die Vorrichtung mindestens einen Temperatursensor zur Messung der Temperatur des Feststoffbettes auf. In besonders bevorzugten Varianten sind die Temperatursensoren im Anstrombereich und/oder im Abstrombereich angeordnet. In besonders bevorzugten Anordnungen werden faseroptische Temperatursensoren eingesetzt, die in elektromagnetischen Feldern störungsfrei messen.

Vorzugsweise weist die Vorrichtung ein Mittel zur Bestimmung der Beladung des Feststoffbettes in Bezug auf die Adsorption eines Schadstoffes und/oder eines Reaktionspartners auf. Vorzugsweise ist das Mittel zur Bestimmung der Beladung des Feststoffbettes mit einem Datenverarbeitungs-/Steuergerät verbunden, das wiederum mit dem HF-Generator und/oder dem mindestens einen Temperatursensor und/oder den Gasanalysatoren und/oder den Gasfeuchtesensoren verbunden ist.

Gemäß der Erfindung kann eine gezielte und selektive Erwärmung von Festbetten durch Initiierung eines gekoppelten Stoff- und Energieflusses realisiert werden. Dabei erfolgt die Einkopplung von Energie in das Festbett in einer solchen Weise, dass durch die Initiierung eines thermo-chromatographischen Pulses die gewünschten räumlichen und zeitlichen Temperatur- und Konzentrationsverläufe erzielt werden.

Die Idee der Erfindung besteht darin, dass durch ein geeignetes Medium elektromagnetische Energie in das Festbett eingekoppelt wird und damit eine dielektrische Erwärmung erfolgt. Durch eine thermisch initiierte kontinuierliche Abfolge von Adsorptions- und Desorptionsprozessen durchwandert ein fokussierter Puls des koppelnden Mediums das Festbett in derselben Weise wie eine chromatographische Säule. Damit gekoppelt ist ein mit dem Trägergasstrom fortlaufender Temperaturpuls, der wiederum mit einem Stofftransport unterschiedlicher Medien gekoppelt sein kann.

Die thermo-chromatographische Erwärmung von Festbetten kann beispielsweise zur zonenweisen Erwärmung von Festbettreaktoren, zur gezielten Entmischung von Stoffströmen, zur Beeinflussung von chemischen Reaktionen durch Mobilisierung eines Reaktionsproduktes oder zur temporären Aufheizung von Festbetten genutzt werden.

Bevorzugte Anwendungsfelder der Erfindung sind die Kopplung von Adsorptions- mit Reaktionsprozessen, die Fokussierung chromatographischer Pulse verbunden mit einer Aufkonzentrierung von ausgewählten Substanzen, die Ausschleusung thermisch sensibler Reaktionsprodukte, die Kurzzeitaktivierung reaktiver Zonen im Festbett und die Etablierung hoher Aufheizraten mit geringer thermischer Trägheit.

Das erfindungsgemäße Verfahren beruht auf der dielektrischen Erwärmung eines Festbettes, vorzugsweise mittels Radiowellen oder Mikrowellen (in einem bevorzugten Frequenzbereich zwischen 100 kHz und 50 GHz) und damit einer Umwandlung elektromagnetischer Energie in Wärme direkt im Volumen des Materials. Die Aufheizung ist somit nicht durch Wärmetransportprozesse über Oberflächen und Grenzflächen limitiert. Sollen die durch das erfindungsgemäße Verfahren zu realisierenden Effekte nicht hervorgerufen werden, wird das Festbett normalerweise durch Einbringen einer geringen Basisleistung bei einer prozessspezifischen Basistemperatur gehalten. Dies kann auch die Umgebungstemperatur sein. In diesem Fall ist während der entsprechenden Zeiträume keine externe Erwärmung notwendig. Prinzipiell ist es auch möglich, die Basistemperatur mittels konventioneller (nicht dielektrischer) Heizverfahren aufrechtzuerhalten.

Gegenüber der konventionellen dielektrischen Erwärmung zeichnet sich das neuartige Verfahren jedoch dadurch aus, dass durch ein geeignetes Medium (Übertragungsmedium) eine erhöhte Energieabsorption im Festkörper initiiert wird. Ein derartiges Medium kann beispielsweise Wasser darstellen, wobei der Effekt des erhöhten Energieeintrages einerseits auf der direkten Wirkung von Wasser als Dipolmolekül und andererseits auf der Wechselwirkung von Wasser mit dem Festbettmaterial beruhen kann. Das letztgenannte Wirkungsprinzip wurde zum Beispiel für die dielektrische Erwärmung von Zeolithen nachgewiesen. Es wurde gezeigt, dass der erhöhte dielektrische Verlust in feuchten Zeolithen weniger auf der Dipolwirkung des Wassers selbst als vielmehr auf der Beeinflussung der mit dielektrischen Verlusten behafteten Kationenbewegung durch die Wasseradsorption beruht.

Durch das Einbringen des Übertragungsmediums in das Festbett wird im entsprechenden Bereich eine schnelle dielektrische Erwärmung ausgehend von der Basistemperatur hervorgerufen. Dabei ist das externe elektromagnetische Feld in jedem Fall einzuschalten. In der Regel wird das Übertragungsmedium bei der Basistemperatur am Festbett adsorbiert. Durch die Temperaturerhöhung erfolgen eine Desorption und eine Freisetzung des Übertragungsmediums in den Gasstrom. Damit verbunden ist ein Transport durch das Festbett und eine wiederholte Adsorption im kälteren Teil des Festbettes. Durch die fortlaufende Einkopplung elektromagnetischer Energie, Aufheizung und Desorption findet ein thermisch initiierter Transport des Übertragungsmediums durch das Festbett vergleichbar mit einem chromatographischen Puls statt. Neben dem Übertragungsmedium selbst können auch andere sorbierbare Substanzen durch das Festbett transportiert werden (thermochromatographischer Effekt).

Das Verfahren ist dadurch gekennzeichnet, dass unter bestimmten Bedingungen wie entsprechende dielektrische Eigenschaften von Übertragungsmedium und Matrix, zeitlicher Verlauf der Injektion des Übertragungsmediums und Gasstrom sehr große Temperaturunterschiede zwischen Basistemperatur und Temperatur im Puls erreicht werden. Die Laufzeit des Pulses durch die Festbettsäule kann dabei sehr gut durch einen Prozess beschrieben werden, dessen charakteristische Aktivierungsenergie eng mit der Adsorptionsenthalpie des Übertragungsmediums an der Festbettmatrix korreliert ist. Aus diesem Grund verringert sich die Laufzeit des thermo-chromatographischen Pulses grundsätzlich mit steigender Basistemperatur und steigender Spitzentemperatur. Dieses Grundprinzip kann mit einer Reihe von technisch relevanten Phänomenen gekoppelt werden. So besteht die Möglichkeit, eine bereits adsorbierte Substanz freizusetzen und mit dem Puls durch das Festbett zu transportieren. Dieser Transport kann mit einer chemischen Umsetzung, die thermisch aktiviert ist, verbunden werden. Durch die starken Temperaturgradienten in der Umgebung des Pulses kann eine Fokussierung von Pulsen, das heißt eine Erhöhung der lokalen Konzentration der sorbierten Substanzen erreicht werden. Charakteristisch ist, dass sich die desorbierten Stoffe in der Regel nur kurz im Bereich hoher Temperatur befinden, da der Puls das Festbett vergleichsweise schnell durchwandert. Durch diese Tatsache können unerwünschte Stoffumwandlungen beispielsweise bei thermisch empfindlichen Substanzen vermieden werden. Anwendungsfelder ergeben sich zum Beispiel bei der adsorptiven Entfernung derartiger Stoffe aus dem Gasstrom und der nachfolgenden Regeneration des Adsorberbettes oder bei der Ausschleusung thermisch sensibler Reaktionsprodukte bei chemischen Stoffumwandlungen. In diesem Kontext können auch die realisierbaren schnellen Aufheiz- und Abkühlprozesse sehr vorteilhaft sein.

Generell bietet das erfindungsgemäße Verfahren gegenüber konventionellen Techniken den Vorteil einer weit höheren Energieeffizienz, da Aufheizprozesse im Festbett sowohl räumlich als auch zeitlich sehr effektiv erfolgen können. Die Aufkonzentrierung von Substanzen bietet die Option, diese aus dem Gasstrom wesentlich günstiger zu entfernen und nach der Regeneration des Adsorbers wiederzuverwerten.

Die Erfindung wird nachstehend anhand von Ausführungsbeispielen näher erläutert.

Es zeigen:
- Fig. 1:: eine schematische Darstellung einer erfindungsgemäßen Vorrichtung zur Erwärmung eines Feststoffbettes und zur Initiierung eines thermo- chromatographischen Pulses (Temperaturpulses),
- Fig. 2:: die mit der in Fig. 1 gezeigten Vorrichtung erzielten Messergebnisse (Temperaturen und Massefluss des Übertragungsmediums) während eines kompletten Durchgangs des Übertragungsmediums durch das Festbett (infolge von wiederholter Adsorption, Desorption und Transport durch das Trägergas) nach einem ersten exemplarischen Ausführungsbeispiel des erfindungsgemäßen Verfahrens,
- Fig. 3:: die während des Durchlaufs des thermo-chromatographischen Pulses detektierten Temperaturen innerhalb des U-Rohr-förmigen Feststoffbettes sowie die damit einhergehende Detektion des Temperaturpulses, und
- Fig. 4:: die mit der in Fig. 1 gezeigten Vorrichtung erzielten Messergebnisse zur Desorption eines Kohlenwasserstoffs aus dem Feststoffbett (Temperaturen, Massefluss des Übertragungsmediums und Gaskonzentrationen des Kohlenwasserstoffs Toluol) während eines kompletten Durchgangs des Übertragungsmediums durch das Feststoffbett (infolge von wiederholter Adsorption, Desorption, Transport des Übertragungsmediums durch das Feststoffbett), welches zuvor mit Kohlenwasserstoff beladen wurde, nach einem zweiten exemplarischen Ausführungsbeispiel des erfindungsgemäßen Verfahrens.

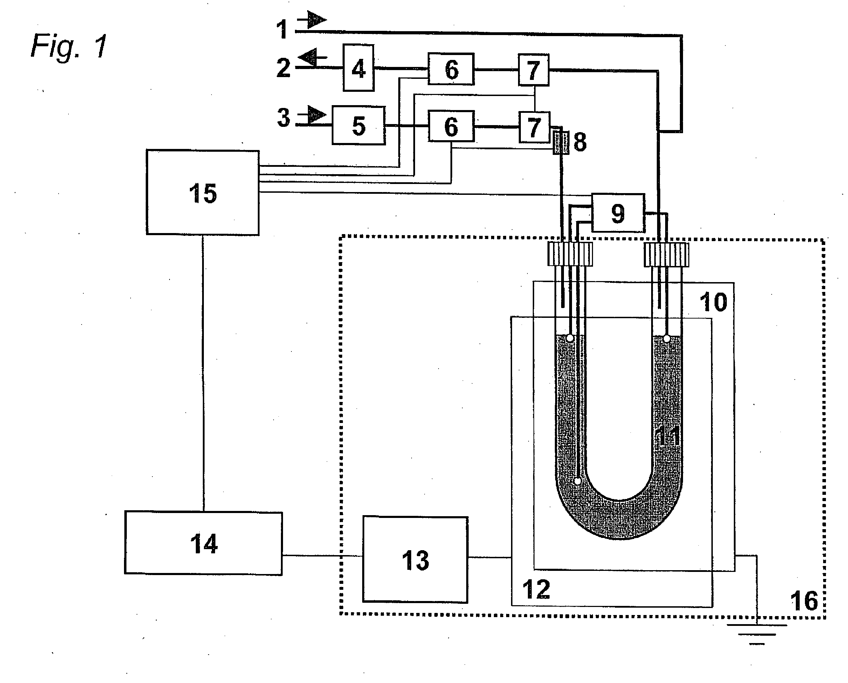

Das Schüttbett 11 wurde realisiert, indem ein U-Rohr (Innendurchmesser 8 mm) mit einem NaY-Zeolith in Granulatform (Partikeldurchmesser ca. 1 mm) gefüllt wurde (Schüttungslänge ca. 170 mm). Das U-Rohr 11 befand sich zwischen zwei parallelen Plattenelektroden 10, 12 und bildete somit das Dielektrikum eines Kondensators. Die Elektroden 10, 12 wurden über ein elektronisches Anpassnetzwerk 13 mittels Koaxialleitungen an einen wassergekühlten HF-Generator 14 (Frequenz 13,56 MHz, Maximalleistung 1 kW) angeschlossen. Im Festbett 11 waren an verschiedenen Stellen faseroptische Temperatursensoren 9 positioniert, die eine kontinuierliche Messung im elektromagnetischen Feld erlaubten. Schüttbettreaktor 11 und Matchbox waren von einem Abschirmgehäuse 16 aus Kupferblech umgeben, um die parasitäre elektromagnetische Abstrahlung in die Umgebung zu minimieren. Der Trägergasstrom (getrocknete Luft) durch das Festbett betrug ca. 150 ml/min. Im An- und Abstrom des Reaktors 11 waren Feuchtesensoren 7 installiert. Die Gesamtanordnung ist in Fig. 1 schematisch dargestellt.

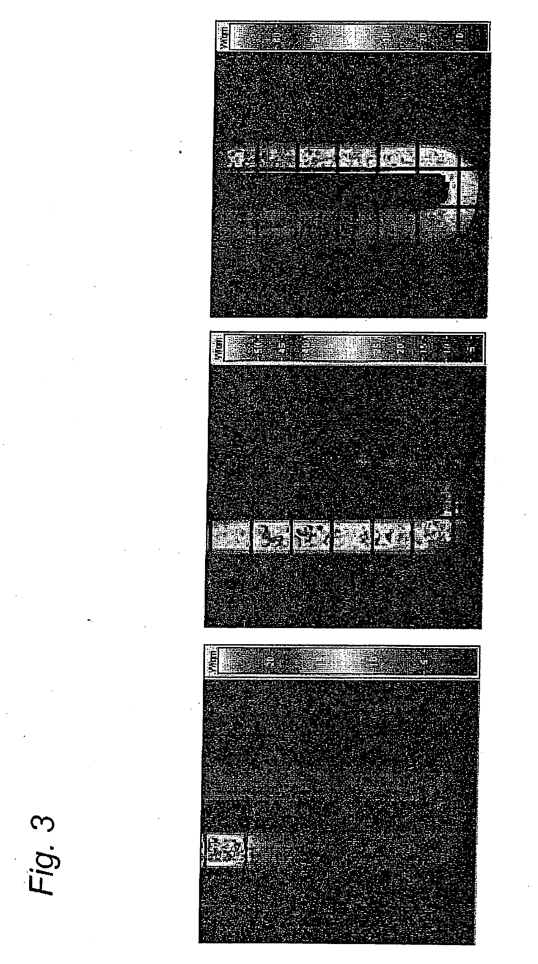

Die Elektrode 12 ist über das elektronische Anpassnetzwerk 13 mit dem HF-Generator 14 verbunden. Letztere sind mit einem Leitsystem-PC gekoppelt. Die andere Elektrode 10 ist geerdet. Das Feststoffbett 11 weist einen Anstrombereich und einen Abstrombereich auf. Das Trägergas wird über eine Leitung 3, an die eine Dosiervorrichtung 5, ein Gasanalysator 6 und ein Gasfeuchtesensor 7 angeschlossen sind, über den Anstrombereich in das Feststoffbett 11 geleitet. Das aus dem Feststoffbett 11 ausströmende Trägergas (Luft) wird über den Abstrombereich und eine Leitung 2, an die ein Durchflussmesser 4, ein Gasanalysator 6 und ein Gasfeuchtesensor 7 angeschlossen sind, aus dem Feststoffbett 11 geleitet. Das Feststoffbett 11 ist im vorliegenden Ausführungsbeispiel U-Rohr-förmig ausgebildet (siehe insbesondere Fig. 3), jedoch ist die Erfindung nicht darauf beschränkt. Es ist vielmehr jede Art von Feststoffbett mit mindestens einem Anstrombereich und mindestens einem Abstrombereich denkbar.

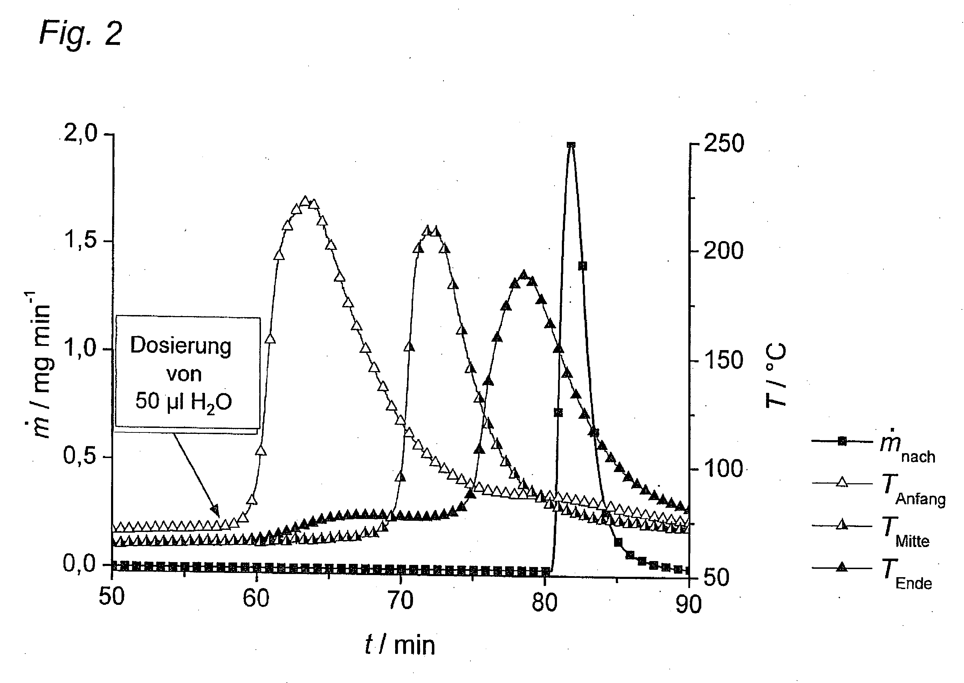

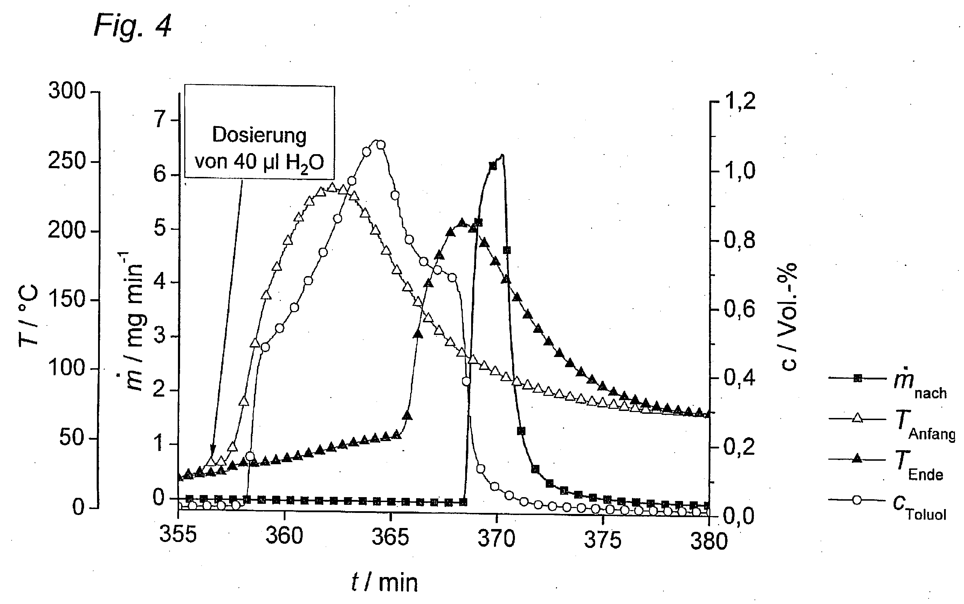

In einer ersten Versuchsphase wurde das Schüttbett 11 mit einer Leistung von 70 W auf eine Basistemperatur von ca. 60°C erwärmt. Auf Grund der isotropen Feld- und Stoffverteilung waren die erzielten Temperaturen innerhalb des Festbettes 11 nahezu konstant. Der Übergang zur zweiten Versuchsphase erfolgte durch die Injektion eines Wasserpulses (ca. 50 µl, Injektionsdauer < 1 s) über die Wasserdirekteinspritzung 8 im Anstrombereich des Feststoffbettes 11. Dadurch wurde ein fortschreitender Temperaturpuls initiiert, der das Festbett in ca. 20 min durchlief. Damit verbunden war ein Wasserpuls, der nach ebenfalls ca. 20 min das Festbett mit dem Trägergasstrom verließ. Temperatur- und Feuchteverläufe sind in Fig. 2 veranschaulicht. In den Fig. 2 und 4 repräsentiert *in*_{nach} den Massestrom des Übertragungsmediums (Wasser) im Abstrom, T_{anfang} repräsentiert die Temperatur des Feststoffbettes 11 im Anstrombereich, T_{Mitte} repräsentiert die Temperatur in der Mitte des U-Rohrs, T_{Ende} repräsentiert die Temperatur des Feststoffbettes 11 im Abstrombereich und C_{Toluol} repräsentiert die Konzentration von Toluol im Abstrom.

Die im Puls erreichte Maximaltemperatur betrug ca. 220°C, die Temperaturdifferenz zur Basistemperatur somit etwa 160 K. Die entstehenden starken Temperaturgradienten innerhalb des Festbettes 11 sind außerdem mit Hilfe einer Infrarot-Aufnahme (Durchglasmessung) veranschaulicht (Fig. 3). Es sei angemerkt, dass etwa dieselbe Breite des Wasserpulses im Abstrom erreicht wurde, wenn das Wasser als Übertragungsmedium über einen längeren Zeitraum bei der Basistemperatur in den Reaktor eingebracht wurde.

In einem weiteren Ausführungsbeispiel (siehe Fig. 4) wurde der oben beschriebene Reaktor (Fig. 1) über den Gasstrom bei Umgebungstemperatur mit Toluol beladen (Konzentration im Gasstrom ca. 3000 ppmv, Beladungsdauer 20 min). Anschließend wurde auf reine, getrocknete Luft als Trägergas umgestellt, wobei der Gasfluss mit 150 ml/min konstant blieb. Nach etwa 15 min wurde durch die Injektion eines Wasserpulses (40 µl) als Übertragungsmedium die Desorptionsphase eingeleitet. Ein das Festbett durchlaufender gekoppelter Temperatur- und Stofftransportpuls führte zu dem in Fig. 4 dargestellten Konzentrationsverlauf von Wasser und Toluol im Abstrom des Schüttbettreaktors 11. Eine nachfolgende Analyse der Restbeladung (< 5 % vom Ausgangswert) zeigte, dass das Toluol durch die thermo-chromatographische Aufheizung nahezu komplett aus dem Adsorberbett entfernt und dabei eine hohe temporäre Kohlenwasserstoffkonzentration (maximal 1,1 Vol.-%) erreicht wurde. Letzterer Aspekt ist beispielsweise relevant, wenn die Abluft anschließend durch ein thermo-katalytisches Verfahren gereinigt werden soll oder wenn eine Wiederverwendung des Desorbates beabsichtigt ist.

## Patentansprüche

1. Verfahren zur Erwärmung eines Feststoffbettes (11), wobei das Feststoffbett (11) mindestens einen Anstrombereich zum Einströmen eines Trägergases in das Feststoffbett (11) und mindestens einen Abstrombereich zum Ausströmen des Trägergases aus dem Feststoffbett (11) aufweist, mit folgenden Verfahrensschritten:
- dielektrische Erwärmung des Feststoffbettes (11) durch Einbringen von elektromagnetischer Strahlung in das Feststoffbett (11), mittels Radiowellen oder Mikrowellen in einem Frequenzbereich zwischen 100 kHz und 50 Ghz,
- Einbringen eines Übertragungsmediums in den Anstrombereich oder einen anderen Bereich des Feststoffbettes (11) und gleichzeitige Durchströmung des Feststoffbettes (11) mit einem Trägergas, wobei das Trägergas kontinuierlich in das Feststoffbett (11) eingeführt wird und das Übertragungsmedium diskontinuierlich vor oder während der dielektrischen Erwärmung in das Feststoffbett (11) eingebracht wird,
- das Feststoffbett (11) mindestens eine das Übertragungsmedium adsorbierende Komponente enthält und das Übertragungsmedium zumindest teilweise am Feststoffbett (11) adsorbiert wird, und
- das Übertragungsmedium zumindest einen Teil der elektromagnetischen Strahlung absorbiert,
- Verweilen des Übertragungsmediums im Feststoffbett (11) derart, dass das Übertragungsmedium eine erhöhte Energieabsorption des Feststoffbettes (11) im Vergleich zum reinen Feststoffbett initiiert,
- Erwärmung des Feststoffbettes (11) aufgrund der erhöhten Energieabsorption des Feststoffbettes (11),
- Desorption des Übertragungsmediums aufgrund der Erwärmung des Feststoffbettes (11), und
- Transport des desorbierten Übertragungsmediums durch das Feststoffbett (11) mittels des Trägergasstroms mittels der Wiederholung der Schritte Adsorption, Erwärmung und Desorption, wobei ein sich durch das Feststoffbett (11) bewegender Temperaturpuls erzeugt wird.

2. Verfahren nach einem der vorhergehenden Ansprüche,
**dadurch gekennzeichnet, dass**
das Übertragungsmedium erneut in das Feststoffbett (11) eingebracht wird, wenn das Übertragungsmedium das Feststoffbett (11) aufgrund wiederholter Adsorption, Erwärmung, Desorption und Weitertransport mittels Trägergas vollständig durchwandert hat.

3. Verfahren nach einem der vorhergehenden Ansprüche,
**dadurch gekennzeichnet, dass**
das Übertragungsmedium periodisch alle 2 bis 180 min eingebracht wird, wobei die Einbringung des Übertragungsmediums innerhalb einer Zeitspanne von 90 s erfolgt.

4. Verfahren nach einem der vorhergehenden Ansprüche,
**dadurch gekennzeichnet,**
**dass** das Übertragungsmedium über das einströmende Trägergas in das Feststoffbett (11) eingebracht wird und/oder
**dass** das Übertragungsmedium durch Direkteinspritzung in das Feststoffbett (11) eingebracht wird.

5. Verfahren nach einem der vorhergehenden Ansprüche,
**dadurch gekennzeichnet, dass**
das Feststoffbett (11) einen Feststoff mit Zeolithstruktur, ein poröses Metalloxid, Silikagel und/oder Aktivkohle enthält.

6. Verfahren nach einem der vorhergehenden Ansprüche,
**dadurch gekennzeichnet, dass**
Wasser als Übertragungsmedium verwendet wird.

7. Verfahren nach einem der vorhergehenden Ansprüche,
**dadurch gekennzeichnet, dass**
aufgrund des sich durch das Feststoffbett (11) bewegenden Temperaturpulses im entsprechenden Bereich des Feststoffbettes (11) eine chemische Reaktion initiiert wird.

8. Verfahren nach Anspruch 7,
**dadurch gekennzeichnet, dass**
nach Initiierung einer exothermen chemischen Reaktion die Intensität des zur dielektrischen Erwärmung verwendeten elektromagnetischen Feldes reduziert wird.

9. Verfahren nach einem der Ansprüche 7 und 8,
**dadurch gekennzeichnet, dass**
durch den Temperaturpuls mindestens einer der folgenden Effekte realisiert wird:
Ausschleusen eines Reaktionsproduktes aus dem Feststoffbett (11), Vermeidung der Zersetzung eines thermisch instabilen Produktes, Beeinflussung der Selektivität einer Reaktion, Beeinflussung des Umsatzes einer Reaktion, Stofftrennung, Erzielung lokaler Temperaturgradienten größer als 10 K/cm, Erzielung lokaler Aufheizraten von mehr als 5 K/min, Erzielung von Abkühlraten von mehr als 5 K/min durch Desorption, Aufkonzentrierung eines Stoffes im Bereich des Temperaturpulses, Aktivierung eines Katalysators, Erhöhung der Lebensdauer eines Katalysators und Etablierung reaktiver Zonen im Feststoffbett (11).

10. Verfahren nach einem der vorhergehenden Ansprüche,
**dadurch gekennzeichnet, dass**
die Geschwindigkeit des Übertragungsmediums aufgrund wiederholter Adsorption, Erwärmung, Desorption und Weitertransport mittels Trägergas durch folgende Parameter:
- Material des Feststoffbettes (11) und des Übertragungsmediums,
- Menge des eingebrachten Übertragungsmediums, und
- Intensität der elektromagnetischen Strahlung
gesteuert wird.

## Claims

1. A method of heating a solid bed (11), which solid bed (11) has at least one inflow area for the inflow of a carrier gas into the solid bed (11) and at least one outflow area for the outflow of the carrier gas from the solid bed (11), said method including the following steps:
- dielectric heating of the solid bed (11) by introducing electromagnetic radiation into the solid bed (11), using radio waves or microwaves in a frequency range of between 100 kHz and 50 GHz;
- introduction of a transfer medium into the inflow area or another area of the solid bed (11) and simultaneous flow of a carrier gas through the solid bed (11), said carrier gas being continuously fed into the solid bed (11), and said transfer medium being introduced discontinuously into the solid bed (11) prior to or during dielectric heating;
- the solid bed (11) including at least one adsorbent component adsorbing the transfer medium, and the transfer medium being adsorbed at least partially on the solid bed (11); and
- the transfer medium absorbing at least part of the electromagnetic radiation;
- retention of the transfer medium in the solid bed (11) in such a way that the transfer medium initiates increased energy absorption of the solid bed (11) compared to the pure solid bed;
- heating of the solid bed (11) as a result of increased energy absorption of the solid bed (11);
- desorption of the transfer medium as a result of solid bed (11) heating; and
- transport of desorbed transfer medium through the solid bed (11) by the stream of carrier gas by repeating the steps of adsorption, heating and desorption, thereby creating a temperature pulse that travels through the solid bed (11).

2. The method as claimed in the preceding claim,
**characterized in that**
the transfer medium is re-introduced into the solid bed (11) when the transfer medium has completely traveled through the solid bed (11) as a result of repeated adsorption, heating, desorption and further transport by the carrier gas.

3. The method as claimed in any of the preceding claims,
**characterized in that**
the transfer medium is introduced periodically at intervals of 2 to 180 min, with transfer medium introduction proceeding within a period of 90 seconds.

4. The method as claimed in any of the preceding claims,
**characterized in that**
the transfer medium is introduced into the solid bed (11) via inflowing carrier gas and/or that the transfer medium is introduced into the solid bed (11) by means of direct injection.

5. The method as claimed in any of the preceding claims,
**characterized in that**
the solid bed (11) contains a solid having a zeolite structure, a porous metal oxide, silica gel and/or activated carbon.

6. The method as claimed in any of the preceding claims,
**characterized in that**
water is used as transfer medium.

7. The method as claimed in any of the preceding claims,
**characterized in that**
the temperature pulse traveling through the solid bed (11) initiates a chemical reaction in the corresponding area of the solid bed (11).

8. The method as claimed in claim 7,
**characterized in that**
the intensity of the electromagnetic field used in dielectric heating is reduced after initiating an exothermic chemical reaction.

9. The method as claimed in any of claims 7 and 8,
**characterized in that**
at least one of the following effects is achieved by means of the temperature pulse:
discharging a reaction product from the solid bed (11), preventing decomposition of a thermally unstable product, influencing the selectivity of a reaction, influencing the turnover of a reaction, separating substances, achieving local temperature gradients of more than 10 K/cm, achieving local heating rates of more than 5 K/min, achieving cooling rates of more than 5 K/min by desorption, concentrating a substance in the area of the temperature pulse, activating a catalyst, increasing the lifetime of a catalyst and establishing reactive zones within the solid bed (11).

10. The method as claimed in any of the preceding claims,
**characterized in that**
the velocity of the transfer medium as a result of repeated adsorption, heating, desorption and further transport by the carrier gas is controlled by the following parameters:
- material of solid bed (11) and transfer medium;
- amount of transfer medium being introduced; and
- intensity of the electromagnetic radiation.

## Revendications

1. Procédé d'échauffement d'un lit de matière solide (11 ), dans lequel le lit de matière solide (11) comprend au moins une zone d'admission permettant l'introduction d'un gaz porteur dans le lit de matière solide (11) et au moins une zone d'évacuation pour évacuer le gaz porteur du lit de matière solide (11), qui comprend les étapes suivantes :
- échauffement diélectrique du lit de matière solide (11) par application d'un rayonnement électromagnétique dans le lit de matière solide (11), au moyen d'ondes radio ou de micro-ondes dans une gamme de fréquences comprise entre 100 kHz et 50 GHz,
- introduction d'un milieu de transmission dans la zone d'admission ou une autre zone du lit de matière solide (11) et traversée simultanée du lit de matière solide (11) avec un gaz porteur, le gaz porteur étant introduit de manière continue dans le lit de matière solide (11) et le milieu de transmission étant introduit de manière discontinue avant ou pendant l'échauffement diélectrique dans le lit de matière solide (11),
- moyennant quoi le lit de matière solide (11) contient au moins un composant adsorbant le milieu de transmission, le milieu de transmission est adsorbé au moins en partie sur le lit de matière solide (11), et
- le milieu de transmission absorbe au moins une partie du rayonnement électromagnétique,
- séjour du milieu de transmission dans le lit de matière solide (11) de telle sorte que le milieu de transmission initie une absorption d'énergie par le lit de matière solide (11) plus grande comparée au lit de matière solide (11) pur,
- échauffement du lit de matière solide (11) induit par une plus grande absorption d'énergie du lit de matière solide (11),
- désorption du milieu de transmission par l'échauffement du lit de matière solide (11), et
- transport du milieu de transmission désorbé au travers du lit de matière solide (11) par le gaz porteur, au moyen de la répétition des étapes d'adsorption, d'échauffement et de désorption, à l'occasion de quoi une impulsion de température parcourant le lit de matière solide (11) est produite.

2. Procédé selon l'une quelconque des revendications précédentes, **caractérisé en ce que**
le milieu de transmission est introduit de manière renouvelée dans le lit de matière solide (11), lorsque le milieu de transmission a parcouru entièrement le lit de matière solide (11) par une adsorption, un échauffement et une désorption répétés et un transport suivant au moyen du gaz porteur.

3. Procédé selon l'une quelconque des revendications précédentes, **caractérisé en ce que**
le milieu de transmission est alimenté périodiquement toutes les 2 à 180 min, l'introduction du milieu de transmission étant réalisée pendant une période de 90 s.

4. Procédé selon l'une quelconque des revendications précédentes, **caractérisé en ce que**
le milieu de transmission est introduit par l'intermédiaire du gaz porteur alimenté dans le lit de matière solide (11), et/ou
**en ce que** le milieu de transmission est introduit par injection directe dans le lit de matière solide (11).

5. Procédé selon l'une quelconque des revendications précédentes, **caractérisé en ce que**
le lit de matière solide (11) contient une matière solide ayant une structure de zéolithe, un oxyde de métal poreux, du gel de silice et/ou du charbon actif.

6. Procédé selon l'une quelconque des revendications précédentes, **caractérisé en ce**
**qu'**on utilise de l'eau en tant que milieu de transmission,.

7. Procédé selon l'une quelconque des revendications précédentes, **caractérisé en ce**
**qu'**une réaction chimique est initiée par l'impulsion de température parcourant le lit de matière solide (11) dans la zone correspondante du lit de matière solide (11).

8. Procédé selon la revendication 7,
**caractérisé en ce**
**qu'**après initiation d'une réaction chimique exothermique, on réduit l'intensité du champ magnétique destiné à produire l'échauffement diélectrique.

9. Procédé selon l'une des revendications 7 et 8,
**caractérisé en ce**
**qu'**au moins un des effets suivants est réalisé par l'impulsion de température :
évacuation d'un produit de réaction du lit de matière solide (11), empêchement de la décomposition d'un produit thermiquement instable, influence sur la sélectivité d'une réaction, influence sur le taux de conversion d'une réaction, séparation de matières, obtention de gradients de température locaux supérieurs à 10 K/cm, obtention de vitesses d'échauffement locales supérieures à 5 K/min, obtention de vitesses de refroidissement supérieures à 5 K/min par désorption, concentration d'une substance dans la zone de l'impulsion de température, activation d'un catalyseur, augmentation de la durée de vie d'un catalyseur et établissement de zones réactives dans le lit de matière solide (11).

10. Procédé selon l'une quelconque des revendications précédentes, **caractérisé en ce que**
la vitesse du milieu de transmission au moyen de la répétition des étapes d'adsorption, d'échauffement, désorption et de transport suivant par le gaz porteur est réglée par les paramètres suivants :
- le matériau du lit de matière solide (11) et du milieu de transmission,
- la quantité du milieu de transmission introduit, et
- l'intensité du rayonnement électromagnétique.
